(19) Europäisches Patentamt
European Patent Office
Office européen des brevets

(11) **EP 3 931 533 B1**

## (12) EUROPEAN PATENT SPECIFICATION

(45) Date of publication and mention
of the grant of the patent:
**15.03.2023 Bulletin 2023/11**

(21) Application number: **20713968.4**

(22) Date of filing: **28.02.2020**

(51) International Patent Classification (IPC):
**G01F 15/18** (2006.01)   **G01F 5/00** (2006.01)
**G01F 1/66** (2006.01)

(52) Cooperative Patent Classification (CPC):
**G01F 5/00; G01F 15/185;** G01F 1/66

(86) International application number:
**PCT/IB2020/051720**

(87) International publication number:
**WO 2020/178691 (10.09.2020 Gazette 2020/37)**

(54) **DEVICE FOR THE MEASUREMENT OF THE FLOW RATE OF A GAS IN A GAS PIPING**

VORRICHTUNG ZUR MESSUNG DER DURCHFLUSSMENGE EINES GASES IN EINER GASLEITUNG

DISPOSITIF DE MESURE DU DÉBIT D'UN GAZ DANS UNE CANALISATION DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2019 IT 201900002969**

(43) Date of publication of application:
**05.01.2022 Bulletin 2022/01**

(73) Proprietor: **Pietro Fiorentini S.p.A.**
**36057 Arcugnano (VI) (IT)**

(72) Inventor: **IMBOCCIOLI, Claudio**
**36051 Creazzo (VI) (IT)**

(74) Representative: **Marchioro, Paolo**
**Studio Bonini S.r.l.**
**Corso Fogazzaro, 8**
**36100 Vicenza (IT)**

(56) References cited:
DE-A1- 2 405 786     US-A- 340 450
US-A- 2 881 012      US-A- 3 443 434
US-A- 4 959 990      US-A1- 2003 070 718
US-A1- 2005 039 545  US-A1- 2018 306 625

EP 3 931 533 B1

**Description**

The invention relates to a device for the measurement of the flow rate of a gas in a gas piping.

Nowadays, for measuring the flow rate of a gas inside a pipe, it is possible to choose between a multiplicity of measuring devices, for example of the membrane deformation type, or of the turbine type, or of the hot wire type, ultrasonic systems, and other similar and equivalent ones.

These devices and systems are normally used at points where a precise measurement is required for tax reasons.

Due to the continuous expansion and diffusion of the so-called 'smart grids' at the infrastructural level also in the gas distribution field, where 'smart gas grid' means a smart gas distribution network that is provided with digital communication systems, smart measurement, control and monitoring, the request for introducing, on already existing and unmonitored sections of distribution lines of networks, devices and systems for the measurement of the gas flow rate where these devices were originally not planned, in order to control, modulate and optimize gas distribution, balance the network and distribute loads evenly to nodes and utilities, is growing steadily.

As mentioned above, systems and devices for detecting the flow rate of a gas configured for the installation at final utilities, where an adequate space can be easily obtained, are currently known and widespread.

The introduction of such known systems and devices on already existing pipings entails numerous drawbacks, linked to the fact that in order to implement this introduction it is necessary to obtain space on such pipings, with technical interventions for removing and replacing a segment or a portion of a segment, with consequent temporary interruption of the service on that line or, alternatively, with the installation of a by-pass.

Devices for the measurement of the flow rate of a gas in a piping are described, for example, in the prior-art documents US 2005/039545 A1, US 2003/070718 and DE 2405786 A1.

The task of the present invention is to provide a device for the measurement of the flow rate of a gas in a piping that can be installed without interrupting the supply service.

Another object of the invention is to develop a device for the measurement of the flow rate of a gas that can be installed without requiring the partial or total removal of the segment where it is applied.

The above mentioned task and objects are achieved by a device for the measurement of the flow rate of a gas in a gas piping according to claim 1.

Further characteristics of the device for the measurement of the flow rate of a gas according to claim 1 are described in the dependent claims.

The task and the aforesaid objects, together with the advantages which will be mentioned below, are highlighted by the description of the device according to the invention, which is given, by way of non-limiting example, with reference to the accompanying drawings, where:

- Figure 1 is a partially sectional schematic side view of a device for the measurement of the flow rate of a gas according to the prior art;
- Figure 2 is a partially sectional schematic side view of a device for the measurement of the flow rate of a gas according to the invention.

A method for detecting the flow rate Q of a gas in a main piping **11,** comprises the following steps:

- diverting a portion of a gas flow in transit in a main piping **11** from said main piping **11** towards measuring means **13,**
- directly measuring the flow rate q of the diverted portion of gas flow,
- re-introducing the portion of gas flow whose flow rate q was measured in said main piping **11,**
- calculating the flow rate Q of the gas flow in the main piping **11** as a function of the flow rate q of the diverted portion of gas flow.

The flow rate q of the measured portion of gas flow is correlated, through an algorithm, to the total flow rate Q of the gas flow of the main piping **11,** whose identification is the main purpose of the invention itself.

In particular, the number of sampling holes is related to the diameter of the main piping **11** according to a mathematical relationship described below.

This mathematical relationship provides for the unknown flow rate Q of the gas flow in the main piping **11** to be a function of the flow rate q of the diverted portion of gas flow measured by the measuring means **13** located on the by-pass line according to the formula:

$$Q = K \cdot q$$

where the following formulas apply to the calibration coefficient K:

$$K = f\left(\{Q_{ref,i}, k_i\}, q\right)$$

$$k_i = f(\phi, S, P, T, \varrho, d, f, n) = \frac{Q_{ref,i}}{q\_cal(\phi, S, P, T, \varrho, d, f, n)}$$

The calibration coefficient K is therefore a function, in turn:

- of a set of n calibration measurements $\{Q_{ref,i}, k_i\}$, with 'i' equal to a number between 1 and n, wherein through the relationship between a preestablished flow rate of reference $Q_{ref,i}$ and a corresponding flow rate $q\_cal_i$ measured with the measuring means **13,** the calibration coefficient $k_i$ at flow rate $Q_{ref,i}$ is determined,
- of the flow rate $q_i$ measured by the measuring means **13,**
- of the diameter $\Phi$ of the main piping **11,**
- of the section of the branch pipes **12** and **16,** and the relative section of the lateral sampling holes **21, 22** and **23** and of the lateral return holes **32, 33** and **34,** and of their number, if any,
- of the pressure in the piping, P
- of the temperature in the piping, T
- of the density of the gas $\rho$,

where the wording f(...) means "function of" and *"q_cal"* is the flow rate measured by the measuring means **13** during the calibration procedure.

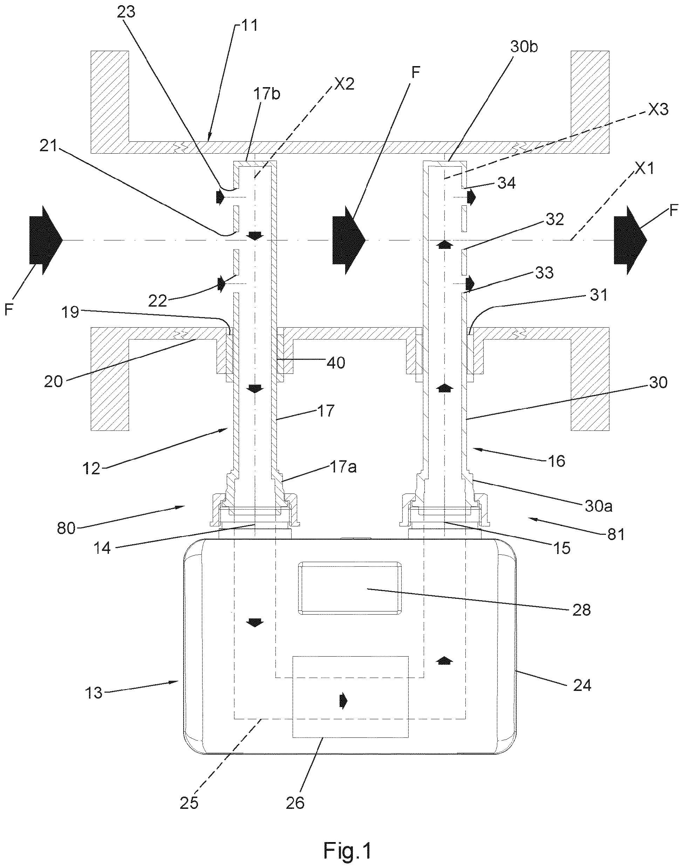

With reference to figure 1, a device for the measurement of the flow rate of a gas in a gas piping is indicated as a whole of the first embodiment thereof, which is not encompassed by the wording of the claims, with number **10.**

Said device **10** for the measurement of the flow rate of a gas in a main gas piping **11** comprises:

- first branch means **80** configured for the diversion of a portion of a gas flow in transit in a main piping **11** towards measuring means **13,**
- measuring means **13,** comprising an inlet mouth **14,** connected to the first branch means **80,** and an outlet mouth **15,** said measuring means **13** being configured for the direct measurement of the flow rate of the portion of gas flow, diverted by the main piping **11,** which crosses the same measuring means **13,**
- second branch means **81,** connected to the outlet mouth **15** and configured for the re-introduction into the main piping **11** of the diverted portion of gas flow crossing the measuring means **13.**

In the first embodiment not encompassed by the wording of the claims, the first branch means **80** comprise a first branch pipe **12,** configured to be positioned inside the main piping **11** according to a second direction **X2** at least in part transversal to a first transit direction **X1** of a gas in the main piping **11;** the first branch pipe **12** is configured for the diversion of a portion of a gas flow in transit in the main piping **11** towards the measuring means **13,** better described below.

The second branch means **81** comprise a second branch pipe **16,** connected to the outlet mouth **15** and configured for the re-introduction into said main piping **11** of the portion of gas flow crossing the measuring means **13.**

In the first embodiment not encompassed by the wording of the claims, the first branch pipe **12** comprises a sampling tube **17.**

Said sampling tube **17** is configured so as to develop according to a second direction **X2** orthogonal to the first direction **X1.**

This second direction **X2** is to be intended as being able to deviate from the orthogonality with the first direction **X1.**

Said sampling tube **17** crosses the wall **20** of the main piping **11** at a through hole **19,** for example radial with respect to the first direction **X1,** defined on the same wall **20.**

Said sampling tube **17** has at a first end **17a** a connecting section for the connection with the measuring means **13,** and in particular with the inlet mouth **14** of the measuring means **13.**

The sampling tube **17** has a second end **17b,** opposite to the first end **17a,** closed, i.e. obstructed.

Preferably, but not necessarily, the sampling tube **17** is positioned in such a way that the second end **17b** is close to or in contact with the internal surface of the wall **20.**

The sampling tube **17** has at least one lateral sampling hole **21.**

The term 'hole' means a through opening of any shape, i.e. circular shape, or polygonal shape, or elliptical, or oval shape, or with an outline of another shape depending on the needs and technical requirements.

In this first embodiment not encompassed by the wording of the claims, each lateral sampling hole is defined according to a direction parallel to the first direction **X1** of the main piping **11.**

Obviously, the holes are to be intended as being able to have a different direction from the direction **X1** of the main piping **11,** and such as to allow the holes themselves to perform the same functionality.

In particular, the sampling tube **17** has three lateral sampling holes **21, 22** and **23** respectively.

The term 'lateral' attributed to the sampling holes means that they are defined on the longitudinal wall of the sampling tube **17.**

These lateral sampling holes **21, 22** and **23** are open and turned in the direction opposite to the direction of the gas flow in the main piping **11,** where this direction of the gas flow is indicated by the arrow **F;** in this way they intercept optimally the gas flow in transit in the main piping **11.**

It should be noted that the letter **"F"** also refers to the same gas flow.

A lateral sampling hole **21** is positioned at the main axis of symmetry of the main piping **11.**

Obviously, also variants in which none of the lateral sampling holes are positioned at the main axis of symmetry of the main piping **11** are to be intended.

Preferably, the lateral sampling holes **21, 22** and **23** are positioned in the central area of the main piping **11,** since it is the area where the gas flow is less disturbed by the various perturbations that can afflict a gas flow in a piping, such as example the 'wall effects'.

The sampling tube **17** crosses the through hole **19** by interposition of sealing means **40.**

Said sealing means can consist of corresponding gaskets, or O-rings, or sealing threads, or liquid gaskets, or sealing tapes, for example of Teflon, or other similar means, considered individually or in combination, depending on the needs and technical requirements.

The measuring means **13,** configured for the direct measurement of the flow rate of the portion of gas flow diverted through the first branch pipe **12** by the main piping **11,** comprise a box-like containment body **24,** inside which a passage **25** is defined in which the portion of gas flow, intercepted and diverted by the first branch means **80,** i.e. by the first branch pipe **12,** passes from the inlet mouth **14** to the outlet mouth **15.**

Inlet mouth **14** and outlet mouth **15** are defined on the box-like body **24.**

The passage **25** is configured in such a way as to let the diverted portion of gas flow pass through a flow rate detector **26** configured for the direct measurement of the transiting gas flow.

The flow rate detector **26** is interposed between the inlet mouth **14** and the outlet mouth **15,** inside the box-like body **24.**

This flow rate detector **26** is, for example, of the ultrasound type.

Alternatively, this flow rate detector **26** is of the membrane type, or of the thermo-mass type, or of the rotoid type, or of the turbine type, or of the flow meter type, or of another similar and equivalent type, depending on the specific technical needs.

The measuring means **13** comprise an electronic unit **28** configured for the transmission of the flow rate values detected by the flow rate detector **26.**

This electronic unit **28** is configured to calculate the gas flow rate in the main piping **11** starting from the values detected by measuring the flow rate of the portion of gas flow passing through the flow rate detector **26.**

The measuring device **10** can comprise an electronic remote calculation unit, not illustrated for simplicity purposes, dedicated to carrying out this calculation of the gas flow rate in the main piping **11.**

The electronic unit **28** can therefore be configured

- either to receive the flow rate values of the gas flow portion detected by the flow rate detector **26** and transmit them to a remote calculation unit,
- or to receive the flow rate values of the gas flow portion detected by the flow rate detector **26,** calculate the gas flow rate in the main piping **11** and transmit the calculated values to a central control and management unit.

The electronic unit **28** can also be configured to calculate the volumes of gas flow transited in a time interval.

In the first embodiment not encompassed by the wording of the claims described herein, the second branch pipe **16** connected to the outlet mouth **15** and configured for the re-introduction into the main piping **11** of the portion of gas flow crossing the measuring means **13,** is equal to the first branch pipe **12** and positioned specularly with respect thereto, i.e. with the lateral holes turned in the same direction of the gas flow **F.**

It is obviously to be understood that this second branch pipe **16,** despite the functional equivalence, can be different from the first branch pipe **12,** i.e. of different length in its main development direction, with different number of lateral holes, with different position of the lateral holes with respect to the first branch pipe **12.**

The second branch pipe **16** comprises a return tube **30,** configured to be positioned according to a third direction **X3** orthogonal to the first direction **X1.** This third direction **X3** is to be intended as being able to deviate from the orthogonality with the first direction **X1.**

This return tube **30** crosses the wall **20** of the main piping **11** at a corresponding through hole **31,** for example, and not exclusively, radial with respect to the first direction **X1,** defined on the same wall **20** of the main piping **11.**

Said return tube **30** has, at a first end **30a,** a connecting section for the connection with the measuring means **13,** and in particular with the outlet mouth **15** of the measuring means **13.**

The return tube **30** has a second end **30b,** opposite to the first end **30a,** closed, i.e. obstructed.

Preferably, but not necessarily, the return tube **30** is positioned in such a way that the second end **30b** is close to or in contact with the internal surface of the wall **20.**

The return tube **30** has at least one lateral return hole **32.**

Each lateral return hole is defined according to a direction parallel to the first direction **X1** of the main piping **11.**

In particular, the return tube **30** has three lateral return holes **32, 33** and **34** respectively.

The term 'lateral' attributed to the return holes means that they are defined on the longitudinal wall of the return tube **30.**

These lateral return holes **32, 33** and **34** are open and turned in the same direction of the gas flow **F** in the main piping **11.**

In particular, each of the lateral return holes **32, 33** and **34** is defined in a radial position of alignment with a corresponding sampling hole **21, 22** and **23.**

This mutual position of the sampling holes **21, 22** and **23** and of the return holes **32, 33** and **34** allows the re-introduction of the sampled portion of gas flow, diverted through the first branch pipe **12** into the measuring means **13,** in the same areas of the gas flow in the main piping **11** from which it was taken, minimizing the interference of the measuring device **10** on the gas flow in transit in the same main piping **11.**

Like the sampling tube **17,** the return tube **30** also crosses the through hole **31** by interposition of sealing means **40,** to be intended as described above.

In a variant embodiment not encompassed by the wording of the claims, not illustrated for simplicity purposes, the return tube develops between the outlet mouth **15** and the through hole **19,** without entering the internal tubular compartment of the main piping **11.**

In this case, the return tube has no lateral holes.

In this case, the second end of the return tube is open, and through it the portion of gas flow returns from the measuring means **13** to the main piping **11.** This measuring device **10,** thanks to the first branch means **80,** i.e. to the first branch pipe **12,** to the measuring means **13** and to the second branch means **81,** i.e. to the second branch pipe **16,** allows creating a pressure differential between two points of a main piping **11** (by sampling and discharging the gas in two separate points, or in the same point as described below), giving rise to a by-pass line inside which the flow rate of the drained portion of gas flow is directly detected.

The first branch means **80,** i.e. the first branch pipe **12,** the measuring means **13** and the second branch means **81** therefore give rise to a by-pass line.

In this way, a drainage of gas flow from the total flow rate transiting in the main piping **11** is made, i.e. a portion of gas flow well below the total flow rate transiting in the main piping **11.**

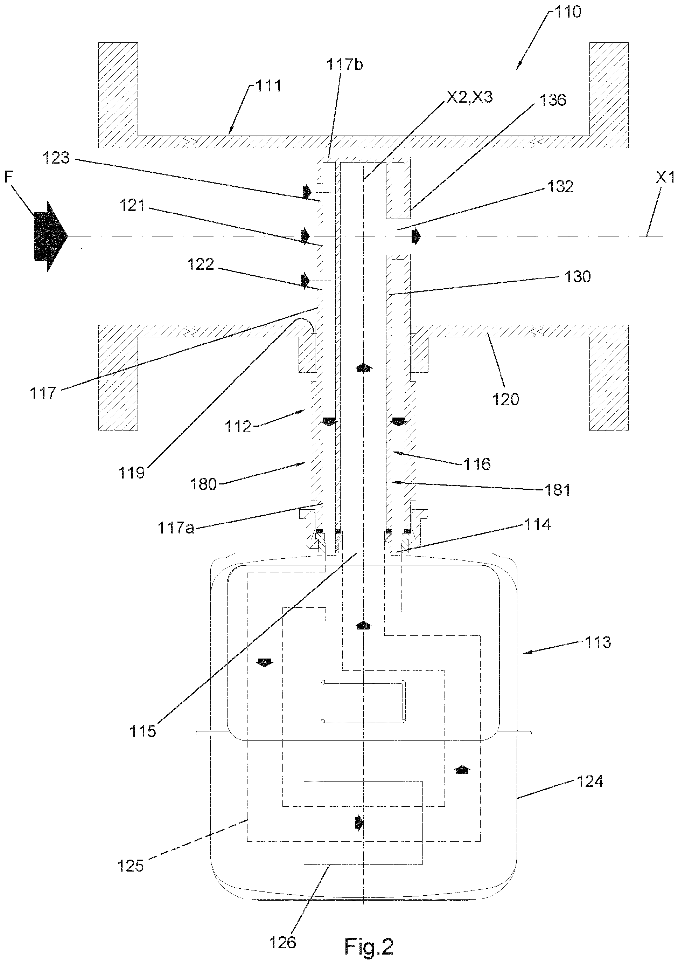

A device for the measurement of the flow rate of a gas in a gas piping according to the invention is represented in Figure 2, and is indicated therein as a whole with number **110.**

Said measuring device **110** comprises, similarly to the embodiment of Figure 1:

- first branch means **180,** which in turn comprise a first branch pipe **112,** developing inside a main piping **111** according to a second direction **X2** at least in part transversal to the first direction **X1** of the main piping **111;** the first branch pipe **112** is configured for the diversion of a portion of a gas flow in transit in the main piping **111** towards measuring means **113,** better described below;

- measuring means **113,** comprising an inlet mouth **114,** connected to the first branch pipe **112,** and an outlet mouth **115;** these measuring means **113** are configured for the direct measurement of the flow rate of the portion of gas flow, diverted by the main piping **111,** which crosses the same measuring means **113;**

- and second branch means **181,** which in turn comprise a second branch pipe **116,** connected to the outlet mouth **115** and configured for the re-introduction into the main piping **111** of the diverted portion of gas flow crossing the measuring means **113.**

The first branch pipe **112** at least partially surrounds the second branch pipe **116.**

In particular, the first branch pipe **112** and the second branch pipe **116** are concentric.

As clearly visible in Figure 2, the first branch pipe **112** is external with respect to the second branch pipe **116.**

In particular, as clearly visible from Figure 2, the first branch pipe **112** entirely surrounds the second branch pipe **116,** i.e. over the whole development direction of the latter.

The main piping **111** has a single through hole **119,** configured for the passage of the first branch pipe **112.**

Similarly to what has been described above for the embodiment of the measuring device **10** according to Figure 1, the first branch pipe **112** comprises an external sampling tube **117,** developing according to a second direction **X2** orthogonal to the first direction **X1.**

As visible in Figure 2, the sampling tube **117** is a cylindrical tube.

This second direction **X2** is to be intended as being able to deviate from the orthogonality with the first direction **X1.**

Said sampling tube **117** crosses the wall **120** of the main piping **111** at the through hole **119,** for example radial with respect to the first direction **X1,** defined on the same wall **120.**

Said sampling tube **117** has at a first end **117a** a connecting section for the connection with the measuring means **113,** and in particular with the inlet mouth **114** of the measuring means **113.**

The sampling tube **117** has a second end **117b,** opposite to the first end **117a,** which second end **117b** is closed, i.e. obstructed.

The sampling tube **117** is positioned in such a way that the second end **117b** is close to or in contact with the internal surface of the wall **120.**

The sampling tube **117** has three lateral sampling holes **121, 122** and **123,** respectively.

The term 'lateral' attributed to the sampling holes means that they are defined on the longitudinal wall of the sampling tube **117.**

These lateral sampling holes **121, 122** and **123** are open and turned in the direction opposite to the direction of the gas flow in the main piping **111,** where this direction of the gas flow is indicated by the arrow **F;** in this way they intercept optimally the gas flow in transit in the main piping **111.**

As visible in Figure 2, a lateral sampling hole **121** of the sampling tube **117** is placed at the axis of the main piping **111.**

The same considerations expressed for the lateral sampling holes of the embodiment of Figure 1 described above apply to the lateral sampling holes **121, 122** and **123.**

Obviously the lateral sampling holes are to be intended as being able to be at least three, i.e. even more than three.

In this embodiment of the invention, the second branch pipe **116,** connected to the outlet mouth **115** and configured for the re-introduction into the main piping **111** of the portion of gas flow crossing the measuring means **113,** is positioned concentric with respect to the first branch pipe **112,** and with a lateral return hole **132** turned in the same direction of the gas flow **F.**

As visible in Figure 2, the lateral return hole **132** develops along the same axis as the main piping **111.**

This peculiarity leads to the advantage of carrying out the re-introduction into the main piping **111** of the portion of gas flow that has crossed the measuring means **113,** in an area of less disturbance for the flow of gas flowing in the main piping **111** downstream of the first branch pipe **112,** less than in other possible re-introduction directions.

The second branch pipe **116** comprises a return tube **130,** developing according to a third direction **X3** orthogonal to the first direction **X1;** in this embodiment of the invention, the third direction **X3** coincides with the second direction **X2.**

As visible in Figure 2, the return tube **130** is also a cylindrical tube.

The lateral return hole **132** comprises a tubular section **136** positioned between the return tube **130** and the sampling tube **117,** so as to create a passage between the second branch pipe **116** and the inside of the main piping **111.**

This return tube **130** crosses the wall **120** of the main piping **111** inside the sampling tube **117.**

A transit cavity is defined between the sampling tube **117** and the return tube **130.**

The portion of gas drained by the sampling tube **117** descends towards the inlet mouth **114** through the transit cavity.

The inlet mouth **114** and the outlet mouth **115** are also positioned concentrically in the measuring means **113.**

The measuring means **113,** configured for the direct measurement of the flow rate of the portion of gas flow diverted through the first branch pipe **112** by the main piping **111,** comprise, as described above, a box-like containment body **124,** inside which a passage **125** is defined in which the portion of gas flow, intercepted and diverted by the first branch pipe **112,** passes from the inlet mouth **114** to the outlet mouth **115.**

Inlet mouth **114** and outlet mouth **115** are defined concentrically on the box-like body **124.**

The passage **125** is configured in such a way as to let the portion of gas flow pass through a flow rate detector **126** configured for the direct measurement of the transiting gas flow.

The flow rate detector **126** is interposed between the inlet mouth **114** and the outlet mouth **115,** inside the box-like body **124.**

This embodiment of the device for the measurement of the flow rate of a gas in a main piping **111** is particularly convenient in terms of simplicity of application, since the use thereof requires the construction of a single through hole **119** in the wall **120** of the main piping **111.**

This embodiment of the device for the measurement of the flow rate of a gas in a main piping **111** is even more particularly convenient in terms of simplicity of construction, since it comprises a first branch pipe **112** and a second branch pipe **116** which comprise respectively a sampling tube **117** and a return tube **130** which are cylindrical, therefore easy to manufacture, and positioned concentrically, with the end of the return tube **130** in contact with the second end **117b** of the sampling tube **117,** therefore easy to assemble.

The other parts and details are intended as corresponding to what described above for the embodiment of Figure 1.

It has in practice been established that the invention achieves the intended task and objects.

In particular,
with the invention a device for the measurement of the flow rate of a gas that can be installed without interrupting the supply service has been developed by using the techniques known in the sector to make one through hole on a piping already in place without interrupting the supply service, so that the device according to the invention can be applied thereto.

Therefore, with the invention a device for the measurement of the flow rate of a gas that can be installed without removing in part or in whole a piping where it is supposed to be applied has been developed.

Furthermore, with the invention a device for the measurement of the flow rate of a gas has been developed in which the measuring means 113 can substantially also consist of a gas meter of a residential or commercial type known per se.

In addition, the device for the measurement of the flow rate of a gas according to the invention is configured for the measurement of a gas flow and not of a pressure differential.

The device for the measurement of the flow rate of a gas according to the invention allows creating a connected system, by sending data to a control centre of the network, widespread and with low monitoring costs, which today is not present at the final distribution level.

This also allows monitoring and managing the network, obtaining a reduction of gas emissions into the atmosphere due to the leakages, i.e. gas leaks, of the same networks.

This measuring device according to the invention ensures a guaranteed measurement without the need for electrical power supply in the cabin, thanks to the use of high-life batteries.

The device according to the invention, in particular, allows retro-fitting on existing systems, in fact starting from an already existing gas distribution piping **111,** by creating a single hole **119,** however creating two outlets, one that exploits the gas flow directly and therefore creates a sort of flow thrust with speed, a total pressure is created that is greater than the static one, and by placing a probe in the main piping **111,** i.e. the first branch pipe **112,** in a direction opposite to the gas flow, as a pressure pick-up, and another probe, i.e. the second branch pipe **116,** oriented in the flow direction, so as to subtract from the total pressure the dynamic pressure plus a certain pressure drop generated by the shape of the probe inserted into the main piping **111,** this difference in pressure between the first and second probes causes a gas flow in a branch of the main piping **111.**

This branch is defined inside the measuring means **113,** i.e. in a gas meter, also of a type known per se.

These measuring means **113** have smaller dimensions than the dimensions of the measuring means such that should be necessarily introduced directly into the main piping **111** to measure the flow rate of the entire gas flow, where the measuring device according to the invention is required to measure only a portion, i.e. a drainage, of the entire gas flow transiting in the main piping.

The invention thus conceived is susceptible of numerous modifications and variations, all of which are within the scope of the invention as defined by the appended claims.

In practice, the materials used could be of any type, so long as they are compatible with the specific use, as well as the contingent shapes and dimensions, according to requirements and the state of the art.

Where the characteristics and techniques mentioned in any claim are followed by reference signs, such reference signs should be intended as having been added for the sole purpose of increasing the intelligibility of the claims and consequently such reference signs have no limiting effect on the interpretation of each element identified by way of example by such reference signs.

**Claims**

**1.** A device (110) for the measurement of the flow rate of a gas in a main gas piping (111), comprising:

    - first branch means (180), which in turn comprise a first branch pipe (112), developing inside a main piping (111) according to a second direction (X2) at least in part transversal to a first direction (X1) of said main piping (111); said first branch pipe (112) being configured for the diversion of a portion of a gas flow in transit in the main piping (111) towards measuring means (113),
    - measuring means (113), comprising an inlet mouth (114), connected to the first branch pipe (112), and an outlet mouth (115), said measuring means (113) being configured for the direct measurement of the flow rate of the portion of gas flow, diverted from the main piping (111), which crosses the same measuring means (113),
    - and second branch means (181), which in turn comprise a second branch pipe (116) connected to the outlet mouth (115) and configured for the re-introduction into the main piping (111) of the diverted portion of gas flow crossing the measuring means (113),

- said first branch pipe (112) and said second branch pipe (116) being concentric, said first branch pipe (112), comprising an external sampling tube (117), developing according to a second direction (X2) orthogonal to the first direction (X1), said sampling tube (117) crossing the wall (120) of said main piping (111) at a through hole (119) defined on the same wall (120),

- said sampling tube (117) having at a first end (117a) a connecting section for the connection with said measuring means (113),

- said sampling tube (117) having a second end (117b), opposite to the first end (117a), closed, and being positioned in such a way that said second end (117b) is close to or in contact with the internal surface of said wall (120),

- said sampling tube (117) having three lateral sampling holes (121, 122, 123), said lateral sampling holes (121, 122, 123) being open, and turned, in the direction opposite to the direction of a gas flow (F) in the main piping (111),

- said second branch pipe (116) comprising a return tube (130), developing according to a third direction (X3) orthogonal to said first direction (X1) and coinciding with said second direction (X2),

**characterized in that**

- a lateral sampling hole (121) of the sampling tube (117) is placed at the axis of the main piping (111),

- said second branch pipe (116) has a lateral return hole (132) turned in the same direction of said gas flow (F), said lateral return hole (132) developing along the same axis as the main piping (111),

- said lateral return hole (132) comprising a tubular section (136) positioned between said return tube (130) and said sampling tube (117), so as to create a passage between the second branch pipe (116) and the inside of said main piping (111).

2. The device according to claim 1, **characterized in that** said measuring means (113), configured for the direct measurement of the flow rate of the portion of gas flow diverted through the first branch pipe (112) from the main piping (111), comprise a box-like containment body (124), inside which a passage (125) is defined through which said portion of gas flow, intercepted and diverted by the first branch pipe (112), passes from said inlet mouth (114) to said outlet mouth (115).

3. The device according to the preceding claim, **characterized in that** said passage (125) is configured in such a way as to let said portion of gas flow pass through a flow rate detector (126) configured for the direct measurement of the transiting gas flow.

4. The device according to claim 3, **characterized in that** said flow rate detector (126) is of the ultrasound type.

5. The device according to one or more of the preceding claims, **characterized in that** said measuring means (113) comprise an electronic unit (28) configured for the transmission of the flow rate values detected by the flow rate detector (126).

**Patentansprüche**

1. Vorrichtung (110) zur Messung der Durchflussmenge eines Gases in einer Hauptgasleitung (111), umfassend:

- erste Abzweigmittel (180), die ihrerseits eine erste Abzweigleitung (112) umfassen, die sich innerhalb einer Hauptleitung (111) gemäß einer zweiten Richtung (X2) zumindest teilweise quer zu einer ersten Richtung (X1) der Hauptleitung (111) erstreckt; wobei die erste Abzweigleitung (112) zur Abzweigung eines Teils eines die Hauptleitung (111) durchströmenden Gasstroms zu den Messmitteln (113) ausgebildet ist,

- Messmittel (113), die eine Einlassöffnung (114), die mit der ersten Abzweigleitung (112) verbunden ist, und eine Auslassöffnung (115) umfassen, wobei die Messmittel (113) zur direkten Messung der Durchflussmenge des Teils des Gasstroms ausgebildet sind, der von der Hauptleitung (111) abgeleitet wird und dieselbe Messmittel (113) durchquert,

- zweite Abzweigmittel (181), die ihrerseits eine zweite Abzweigleitung (116) umfassen, die mit der Auslassöffnung (115) verbunden ist und zum Wiedereinleiten des abgezweigten Teils des die Messmittel (113) durchströmenden Gasstroms in die Hauptleitung (111) ausgebildet ist,

- wobei die erste Abzweigleitung (112) und die zweite Abzweigleitung (116) konzentrisch sind, wobei die erste Abzweigleitung (112) ein externes Probenentnahmerohr (117) umfasst, das sich gemäß einer zweiten Richtung (X2) orthogonal zur ersten Richtung (X1) erstreckt, wobei das Probenentnahmerohr (117) die Wand (120) der Hauptleitung (111) an einem Durchgangsloch (119) durchquert, das auf derselben Wand (120) definiert ist,
- wobei das Probenentnahmerohr (117) an einem ersten Ende (117a) einen Verbindungsabschnitt für die Verbindung mit den Messmitteln (113) aufweist,
- wobei das Probenentnahmerohr (117) ein zweites, dem ersten Ende (117a) gegenüberliegendes, geschlossenes Ende (117b) aufweist und so positioniert ist, dass das zweite Ende (117b) nahe an oder in Kontakt mit der Innenfläche der Wand (120) ist,
- wobei das Probenentnahmerohr (117) drei seitliche Probenentnahmelöcher (121, 122, 123) aufweist, wobei die seitlichen Probenentnahmelöcher (121, 122, 123) offen sind und in die zur Richtung eines Gasflusses (F) entgegensetzte Richtung in der Hauptleitung (111) gedreht sind,
- wobei die zweite Abzweigleitung (116) ein Rücklaufrohr (130) umfasst, das sich gemäß einer dritten Richtung (X3) orthogonal zur ersten Richtung (X1) erstreckt und mit der zweiten Richtung (X2) zusammenfällt,

**dadurch gekennzeichnet, dass**

- ein seitliches Probenentnahmeloch (121) des Probenentnahmerohrs (117) befindet sich an der Achse der Hauptleitung (111),
- die zweite Abzweigleitung (116) ein seitliches Rücklaufloch (132) aufweist, das in die gleiche Richtung des Gasflusses (F) gedreht ist, wobei das seitliche Rücklaufloch (132) entlang der gleichen Achse wie die Hauptleitung (111) verläuft,
- wobei das seitliche Rücklaufloch (132) einen rohrförmigen Abschnitt (136) umfasst, der zwischen dem Rücklaufrohr (130) und dem Probenentnahmerohr (117) angeordnet ist, um einen Durchgang zwischen dem zweiten Abzweigleitung (116) und dem Inneren der Hauptleitung (111) zu schaffen.

2. Vorrichtung nach Anspruch 1, **dadurch gekennzeichnet, dass** die Messmittel (113), die zur direkten Messung der Durchflussmenge des Teils des Gasstroms ausgebildet sind, der durch die erste Abzweigleitung (112) von der Hauptleitung (111) abgezweigt wird, einen kastenartigen Aufnahmekörper (124) umfassen, in dem ein Durchgang (125) definiert ist, durch den der Teil des Gasstroms, der durch die erste Abzweigleitung (112) abgefangen und abgezweigt wird, von der Einlassöffnung (114) zu der Auslassöffnung (115) fließt.

3. Vorrichtung nach dem vorhergehenden Anspruch, **dadurch gekennzeichnet, dass** der Durchgang (125) so gestaltet ist, dass der Teil des Gasstroms einen Durchflussmengedetektor (126) durchströmt der für die direkte Messung des durchströmenden Gasstroms ausgelegt ist.

4. Vorrichtung nach Anspruch 3, **dadurch gekennzeichnet, dass** der Durchflussmengedetektor (126) vom Ultraschalltyp ist.

5. Vorrichtung nach einem oder mehreren der vorhergehenden Ansprüche, **dadurch gekennzeichnet, dass** die Messmittel (113) eine elektronische Einheit (28) umfassen, die für die Übertragung der von dem Durchflussmengedetektor (126) erfassten Durchflusswerte ausgebildet ist.

**Revendications**

1. Dispositif (110) pour la mesure du débit d'un gaz dans une canalisation de gaz principale (111), comprenant:

- des premiers moyens de dérivation (180), qui comprennent à leur tour un premier tuyau de dérivation (112), se développant à l'intérieur d'une canalisation principale (111) suivant une deuxième direction (X2) au moins en partie transversale à une première direction (X1) de ladite canalisation principale (111); ledit premier tuyau de dérivation (112) étant configuré pour la déviation d'une partie d'un flux de gaz en transit dans la canalisation principale (111) vers des moyens de mesure (113),
- des moyens de mesure (113) comprenant une embouchure d'entrée (114), reliée au premier tuyau de dérivation (112), et une embouchure de sortie (115), lesdits moyens de mesure (113) étant configurés pour la mesure directe du débit de la partie du flux de gaz, déviée à partir de la canalisation principale (111), qui traverse les mêmes moyens de mesure (113),
- et des seconds moyens de dérivation (181), qui comprennent à leur tour un second tuyau de dérivation (116) relié à l'embouchure de sortie (115) et configuré pour la réintroduction dans la canalisation principale (111) de la partie déviée du flux de gaz traversant les moyens de mesure (113),

- ledit premier tuyau de dérivation (112) et ledit second tuyau de dérivation (116) étant concentriques, ledit premier tuyau de dérivation (112), comprenant un tube d'échantillonnage externe (117), se développant suivant une deuxième direction (X2) orthogonale à la première direction (X1), ledit tube d'échantillonnage (117) traversant la paroi (120) de ladite canalisation principale (111) au niveau d'un trou traversant (119) défini sur la même paroi (120),
- ledit tube d'échantillonnage (117) ayant à une première extrémité (117a) une section de connexion pour la connexion avec lesdits moyens de mesure (113),
- ledit tube d'échantillonnage (117) ayant une seconde extrémité (117b), opposée à la première extrémité (117a), fermée, et étant positionné de telle manière que ladite seconde extrémité (117b) est proche de ou en contact avec la surface interne de ladite paroi (120),
- ledit tube d'échantillonnage (117) ayant trois trous d'échantillonnage latéraux (121, 122, 123), lesdits trous d'échantillonnage latéraux (121, 122, 123) étant ouverts, et tournés, dans la direction opposée à la direction d'un flux de gaz (F) dans la canalisation principale (111),
- ledit second tuyau de dérivation (116) comprenant un tube de retour (130), se développant suivant une troisième direction (X3) orthogonale à ladite première direction (X1) et coïncidant avec ladite deuxième direction (X2),

**caractérisé en ce que**

- un trou d'échantillonnage latéral (121) du tube d'échantillonnage (117) est placé au niveau de l'axe de la canalisation principale (111),
- ledit second tuyau de dérivation (116) a un trou de retour latéral (132) tourné dans la même direction que ledit flux de gaz (F), ledit trou de retour latéral (132) se développant le long du même axe que la canalisation principale (111),
- ledit trou de retour latéral (132) comprenant une section tubulaire (136) positionnée entre ledit tube de retour (130) et ledit tube d'échantillonnage (117), de manière à créer un passage entre le second tuyau de dérivation (116) et l'intérieur de ladite canalisation principale (111).

2. Dispositif selon la revendication 1, **caractérisé en ce que** lesdits moyens de mesure (113), configurés pour la mesure directe du débit de la partie de flux de gaz déviée par le premier tuyau de dérivation (112) à partir de la canalisation principale (111), comprennent un corps de confinement en forme de boîte (124), à l'intérieur duquel est défini un passage (125) à travers lequel ladite partie de flux de gaz, interceptée et déviée par le premier tuyau de dérivation (112), passe de ladite embouchure d'entrée (114) à ladite embouchure de sortie (115).

3. Dispositif selon la revendication précédente, **caractérisé en ce que** ledit passage (125) est configuré de manière à laisser passer ladite partie de flux de gaz à travers un détecteur de débit (126) configuré pour la mesure directe du flux de gaz en transit.

4. Dispositif selon la revendication 3, **caractérisé en ce que** ledit détecteur de débit (126) est du type à ultrasons.

5. Dispositif selon une ou plusieurs des revendications précédentes, **caractérisé en ce que** lesdits moyens de mesure (113) comprennent une unité électronique (28) configurée pour la transmission des valeurs de débit détectées par le détecteur de débit (126).

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005039545 A1
- US 2003070718 A
- DE 2405786 A1